# EUROPEAN PATENT APPLICATION

(11) **EP 1 186 894 A1**
(43) Date of publication of application: **13.03.2002**
(21) Application number: 01850155.1
(22) Date of filing: 07.09.2001
(51) Int. Cl.: G01P 13/04, G01P 3/489, G01P 3/481, G01D 5/245

(54) **Angular speed sensor with reference mark**

(30) Priority: 07.09.2000 SE 0003169
(71) Applicant: SEM AB, 662 21 Amal (SE)
(72) Inventor: Bengtsson, Jörgen, 662 96 Svanskog (SE)
(74) Representative: Onn, Thorsten

(57) **Abstract**

An arrangement for detecting the angular position, the angular speed and the direction of rotation of an axis of a rotating body with teeth (1,3), such as a flywheel in an internal combustion engine. The arrangement comprises at least two sensors (2a,2b) that are arranged next to each other, one of them (2a) somewhat behind the other (2b) with respect to the direction of rotation and furthermore displaced also in an axial direction, in order to give phase-displaced pulses when the respective teeth (1,3) on the rotating body pass them. One part of one tooth (3) has been removed such that the sensor (2a) that is arranged to detect the area corresponding to exactly this part gives a reference pulse when this tooth passes. The phase shifted pulses allow detection of speed and direction, the arrangement comprises two trades of encoding elements and two signal channels.

## Description

### Technical Area

The invention concerns an arrangement to detect the angular position, the angular speed and the direction of rotation of an axis of a rotating body. The rotating body can be constituted by, for example, a flywheel in an internal combustion engine or a toothed wheel attached to a shaft of a motor.

### The Prior Art

The detection of the angular position of a crank shaft of an internal combustion engine by arranging two magnetic sensors separated by an angle that detect irregularly arranged slots in a rotating wheel is previously known, whereby the pulses that are obtained give different patterns, through which phenomenon the angular position of the shaft can be indicated, see EP-A-0 486 088.

The use of two phase-displaced transmitters placed at a distance from each other and arranged at a rotating toothed-wheel with equally spaced teeth in order to determine the speed and the direction of the rotation of the wheel is also known, see EP-A-0 023801.

The use of two sensors placed at a distance from each other, both relative to the direction of rotation and relative to the axial direction, in order to detect reference positions and ignition timing in an internal combustion engine is also known through US 5 184 590.

### Summary of the Invention

The invention concerns a new arrangement to detect the angular position, the angular speed and the direction of rotation of an axis of a rotating body, which arrangement is simple to produce, can be made small and compact, is easy and cheap to mount and only requires normal, simple circuit components (sequential logic) for the signal processing. The invention is particularly applicable for the flywheel of an internal combustion engine or at a toothed wheel attached to a shaft in a motor. In particular, the invention can be used on a motorcycle where a compact position sensor is needed that provides information about the position of the crankshaft (the position of the pistons) and the angular speed in order to be able to generate an ignition position with very high precision. This means that a sufficient number of tooth surfaces whose position is known must be available for the control unit to base the calculation on. It is of major importance for a number of reasons, including reasons of personal safety, that the control unit has information about the direction and the speed of rotation of the motor. Analysis of the information from such precise transmitters thus places a heavy load on the program of the control unit, something that is disadvantageous, and may lead to solutions that are uneconomical from other points of view. The present invention is particularly applicable to alleviate this problem.

The task is carried out in that the arrangement comprises at least two sensors, which are located at a distance from each other both with respect to the direction of rotation and with respect to the axial direction. The sensors may be magnetic and/or optosensors or capacitive sensors, and they are arranged to give pulses when "teeth" on the outer surface of the rotating body pass them during the rotation. A part of at least one tooth has been removed in the axial direction of the rotating body, or, alternatively, the space between two teeth may be only partially filled in the axial direction of the rotating body. The sensors are arranged to measure with a time displacement of various parts of each tooth, whereby the pulse sequences will be different for clockwise and for anti-clockwise rotation.

Other characteristics are made clear by the accompanying claims.

### Description of Embodiments

The invention is described in more detail below with the aid of embodiments shown in the drawings.

**Figure 1** shows a sketch of the principle of the location of the teeth and sensors where the axis of the rotating body runs perpendicular to the plane of the drawing.

**Figure 2** shows a rotating body in which the axis of the rotating body lies parallel to the plane of the drawing.

**Figure 3** shows diagrams of the trigger pulses and the reference pulses according to one embodiment of the invention.

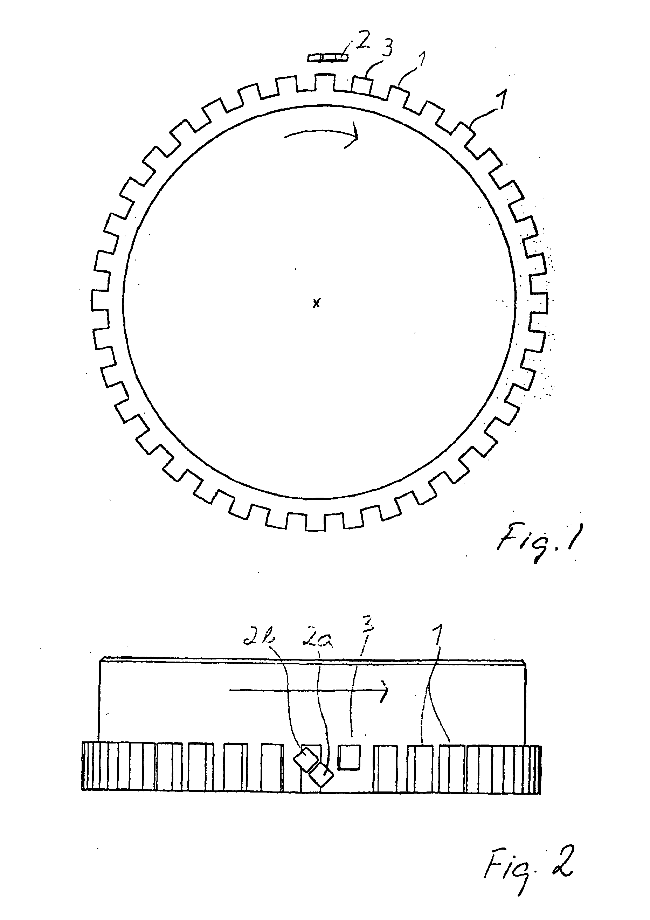

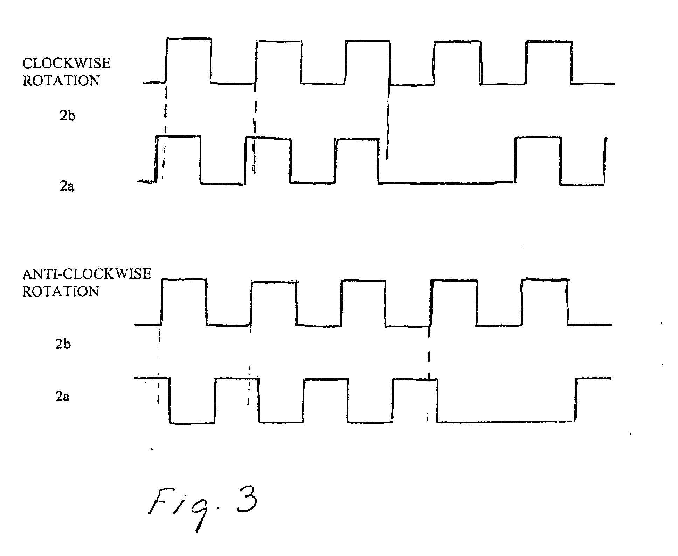

In Figures 1 and 2, reference symbol 1 denotes "teeth" arranged at regular intervals on the rotating body. The teeth may comprise magnetic conducting material and/or optically reflecting material or material that can be detected capacitively according to the type of sensor that is to detect them when they pass the sensors 2 during rotation of the rotating body in the direction of the arrow. The rotating body rotates in the direction shown by the arrow around an axis that is suggested in Figure 1.

The teeth 1 may protrude from or be embedded in the outer surface of the rotating body, or they may be arranged in some other manner such that they can be detected by sensors 2 that are arranged in co-operation with the teeth. The teeth 1 do not necessarily have the shape shown in the drawing, but may be designed in another way that is suitable for giving pulses when they pass the sensors 2.

One part of at least one tooth, denoted by 3 in the figures, has a different design. In the case shown the tooth 3 is half the size of other teeth 1, see Figure 2. The different tooth 3 is designed such that a sensor 2a that is arranged to detect the missing part of the different tooth will be able to give a pulse sequence that is different from the pulse sequence of a second sensor 2b that is arranged to detect the regularly arranged teeth. Thus, the different tooth will be able to provide a reference pulse. The different tooth may also be designed by partially filling in the space between two teeth. For example, the space may be filled to half its extent in the axial direction. The number of teeth may be even or odd. The teeth may also be located on the inner surface of the rotating body if it is hollow. In this case, it is appropriate that the sensors are also arranged inside the rotating body.

In the embodiment shown in Figure 2, two sensors 2a and 2b have been arranged. It is appropriate to locate the sensors 2a and 2b next to each other on a support (not shown). The support is placed at an angle such that one sensor, sensor 2b in the case shown here, is arranged somewhat in front of the second sensor 2a with respect to the direction of rotation. Furthermore, the sensor 2a is located such that it detects that part of the different tooth 3 that has been removed. Sensor 2b, on the other hand, measures that part of the tooth 3 that has not been removed, that is, sensor 2b gives a regular pulse sequence, while sensor 2a gives a pulse sequence containing a gap, see Figure 3. The sensors 2a and 2b thus measure with a time displacement on different parts of the respective teeth. The pulse sequences will be different for clockwise and for anti-clockwise rotation, see Figure 3.

The sensors may be magnetic sensors and/or optical sensors or capacitive sensors, whereby the teeth are correspondingly arranged with magnetic transmitters, optical transmitters or capacitive transmitters. If Hall effect transmitters, for example, are used, it is possible to reduce the rate of revolution in order to detect the zero position.

Figure 3 shows a pulse diagram for the embodiment shown in Figures 1 and 2, where the material of the tooth 3 has been removed and the sensors, that is, the angle detector, has been rotated according to Figure 2. A "zero pulse" or reference pulse can be determined with the aid of the different tooth. Furthermore, the angle, that is, the position of the shaft, and the speed and/or the direction of rotation can be determined given knowledge of the number of teeth and the appearance of the different tooth. Circuits for this are not shown, since such circuits are well known to one skilled in the arts.

According to one preferred embodiment of the invention, the sensors are arranged on a supporting unit, which is located in association with the outer surface of the rotating body. The sensors may be placed next to each other, whereby the unit is placed at an angle relative to the axis of the rotating body in order to obtain the desired displacement both in the direction of rotation and in the axial direction. The sensors may also be arranged displaced and at an angle to each other on the support, which in this case does not then need to be placed at an angle.

According to a further embodiment of the invention, the supporting unit is arranged in a surrounding cover, whereby the complete cover can be adjusted with respect to the axis of the rotating body.

In order to reduce the sensitivity of the arrangement to disturbances, optocouplers may be used for the inputs.

## Claims

1. An arrangement for detecting the position, the angular speed and the direction of rotation of an axis of a rotating body, whereby the arrangement comprises at least two magnetic and/or optical sensors or capacitive sensors (2a, 2b) that are located at a distance from each other relative both to the direction of rotation and to the axial direction, arranged to provide pulses when teeth (1, 3) on the outer surface of the rotating body pass them, and that a part of at least one tooth (3) has been removed, or the space between two teeth has been halfway filled in, in the axial direction of the rotating body, **characterised in that** the sensors are arranged such that they measure with a time displacement on different parts of the respective tooth whereby the pulse sequences will be different for clockwise and for anti-clockwise rotation of the rotating body.

2. The arrangement according to claim 1, **characterised in that** the sensors are arranged on a supporting unit.

3. The arrangement according to claim 2, **characterised in that** the supporting unit is arranged in a surrounding cover.

4. The arrangement according to claim 2, **characterised in that** the supporting unit and/or the cover is placed at an angle relative to the axis of the rotating body.

5. The arrangement according to claim 1, **characterised in that** the rotating body is a flywheel in an internal combustion engine.

6. The arrangement according to claim 1, **characterised in that** the rotating body is a toothed wheel attached to a shaft in a motor.
